# EUROPÄISCHE PATENTANMELDUNG

(11) **EP 4 112 959 A1**
(43) Veröffentlichungstag der Anmeldung: **04.01.2023**
(21) Anmeldenummer: 22180313.3
(22) Anmeldetag: 22.06.2022
(51) Int. Cl.: F16C 33/78, F16J 15/3272, F03D 80/00, F03D 80/70

(54) **DICHTUNGSANORDNUNG FÜR EIN LAGER, WINDENERGIEANLAGE UND VERFAHREN ZUM ANORDNEN EINER DICHTUNGSANORDNUNG**

(30) Priorität: 28.06.2021 DE 102021116583
(71) Anmelder: Nordex Energy SE & Co. KG, 22419 Hamburg (DE)
(72) Erfinder: Kohlrusch, Matthias, 22419 Hamburg (DE)
(74) Vertreter: Epping - Hermann - Fischer

(57) **Zusammenfassung**

Eine Dichtungsanordnung (200) zum Abdichten eines Innenraums (116) zwischen einem Lagergehäuse (115) und einer drehbaren Welle (109) gegenüber einer Umgebung:
- einen an dem Lagergehäuse (115) befestigbaren Dichtungskörper (203, 204) mit einem ersten Ende (205) und einem zweiten Ende (206), wobei der Dichtungskörper (203, 204) entlang einer Haupterstreckungsrichtung (207) länglich ausgedehnt ist und ausgebildet ist, in einem montierten Zustand ringförmig um die drehbare Welle (109) angeordnet zu sein, sodass das erste Ende (205) und das zweite Ende (206) eine gemeinsame Stoßstelle (209) aufweisen,
- einen vorspringenden Bereich (210), der an dem ersten Ende (205) des Dichtungskörpers (203, 204) angeordnet ist und tangential zur drehbaren Welle (109) in Richtung einer vorgegebenen Hauptdrehrichtung (113) der drehbaren Welle (109) vorspringt, sodass der vorspringende Bereich (210) über den Dichtungskörper (203, 204) übersteht und die Stoßstelle (209) auf einer dem Innenraum (116) zugewandten Seite überlappt.

## Beschreibung

Die Erfindung betrifft eine Dichtungsanordnung zum Abdichten eines Innenraums zwischen einem Lagergehäuse und einer drehbaren Welle gegenüber einer Umgebung sowie eine Windenergieanlage mit einer solchen Dichtungsanordnung. Zudem betrifft die Erfindung ein Verfahren zum Anordnen einer Dichtungsanordnung zum Abdichten eines Innenraums zwischen einem Lagergehäuse und einer drehbaren Welle gegenüber einer Umgebung, insbesondere ein Verfahren zum Anordnen einer hier beschriebenen Dichtungsanordnung.

Eine Windenergieanlage weist einen Rotor auf, mittels dessen Windenergie in ein Antriebsdrehmoment umgewandelt werden kann, das über einen Triebstrang einen Generator antreiben kann. Der Triebstrang, der Generator und andere Komponenten können in einer Gondel montiert sein, die auf einem Turm positioniert ist. Der Triebstrang weist typischerweise eine Rotorwelle auf, die durch ein (oder mehrere) Rotorlager gelagert wird. Das Rotorlager bzw. die Rotorlager ist/sind in einem Rotorlagergehäuse angeordnet. Der Innenraum zwischen dem Rotorlagergehäuse und der Rotorwelle ist mittels eine Dichtungsanordnung gegenüber der Umgebung abgedichtet.

Es ist wünschenswert, eine Dichtungsanordnung anzugeben, die einen zuverlässigen Betrieb ermöglicht. Es ist zudem wünschenswert, eine Windenergieanlage anzugeben, die einen verlässlichen Betrieb ermöglicht. Es ist zudem wünschenswert, ein Verfahren anzugeben, das einen verlässlichen Betrieb ermöglicht.

Um eine drehbare Welle zu lagern, werden Lager wie zum Beispiel Wälzlager oder Gleitlager eingesetzt. Die Lagerung einer drehbaren Welle erfolgt durch ein (oder mehrere) Lager, das innerhalb eines Lagergehäuses angeordnet ist. Das Lager befindet sich somit in einem Innenraum zwischen dem Lagergehäuse und der drehbaren Welle. Um die Reibung und die Abnutzung im Lager zu reduzieren wird das Lager mit Schmiermittel versorgt, beispielsweise mit Schmierfett oder mit Schmieröl. Der Innenraum zwischen dem Lagergehäuse und der drehbaren Welle wird mithilfe einer Dichtungsanordnung axial abgedichtet, um einen unkontrollierten Schmiermittelaustritt aus dem Innenraum in die Umgebung zu verhindern. Beispielsweise erstreckt sich diese Dichtungsanordnung radial aus dem Lagergehäuse zur drehbaren Welle. Dadurch wird sichergestellt, dass sich eine ausreichende Menge an Schmiermittel im Innenraum befindet, sodass eine Mangelschmierung des Lagers vermieden wird.

Gemäß einer Ausführungsform weist eine Dichtungsanordnung für ein Lager zum Abdichten eines Innenraums zwischen einem Lagergehäuse und einer drehbaren Welle gegenüber einer Umgebung auf:
- einen an dem Lagergehäuse befestigbaren Dichtungskörper mit einem ersten Ende und einem zweiten Ende, wobei der Dichtungskörper entlang einer Haupterstreckungsrichtung länglich ausgedehnt ist und ausgebildet ist, in einem montierten Zustand ringförmig um die drehbare Welle angeordnet zu sein, sodass das erste Ende und das zweite Ende eine gemeinsame Stoßstelle aufweisen,
- einen vorspringenden Bereich, der an dem ersten Ende des Dichtungskörpers angeordnet ist und tangential zur drehbaren Welle in Richtung einer vorgegebenen Hauptdrehrichtung der drehbaren Welle vorspringt, sodass der vorspringende Bereich über den Dichtungskörper übersteht und die Stoßstelle auf einer dem Innenraum zugewandten Seite überlappt.

Der vorspringende Bereich überdeckt die Stoßstelle, sodass im Betrieb Schmierfett oder anderes Schmiermittel aus dem Innenraum nicht oder nur geringfügig zur Stoßstelle gelangt und die Stoßstelle ungewohnt durchdringen kann. Der vorspringende Bereich überdeckt die Stoßstelle, sodass es keinen geradlinigen, einfachen Durchgang für das Schmiermittel durch den Dichtungskörper hindurch gibt.

Der vorspringende Bereich überlappt die Stoßstelle derart, dass das Schmiermittel im Betrieb aufgrund der Rotation der drehbaren Welle und des daran anhaftenden Schmiermittels mittels des vorspringenden Bereichs von der Stoßstelle weg bewegt wird. Beispielsweise erstreckt sich der vorspringende Bereich länglich ausgedehnt entlang der Haupterstreckungsrichtung tangential zur drehbaren Welle in Richtung der vorgegebenen Hauptdrehrichtung der drehbaren Welle 10 bis 20 mm über das erste Ende des Dichtungskörpers hinaus. Auch andere Dimensionierungen sind möglich, beispielsweise weist der vorspringende Bereich eine Länge zwischen 10 und 50 mm auf, insbesondere eine Länge zwischen 10 und 30 mm. Die Dichtungsanordnung mit dem vorspringenden Bereich ermöglicht, dass im Betrieb wenig bis möglichst gar kein Schmiermittel aus dem Innenraum ungewollt nach außen tritt. Außerdem verhindert oder verringert die Dichtungsanordnung so einen ungewollten Schmiermittelaustritt auch im Stillstand. Somit ist im montierten Zustand sowohl im Stillstand als auch im Betrieb der Innenraum aufgrund der überlappten Stoßstelle verlässlich abgedichtet und somit ist das Lager verlässlich geschmiert. Dies trägt zu einem verlässlichen Betrieb des Lagers und der Windenergieanlage bei.

Gemäß zumindest einer weiteren Ausführungsform ist der Dichtungskörper aus mindestens zwei Dichtungssegmenten gebildet. Beispielsweise ist der Dichtungskörper aus zwei Dichtungssegmenten gebildet, aus drei Dichtungssegmenten, aus vier Dichtungssegmenten oder mehr, die jeweils zusammengelegt ringförmig die drehbare Welle vollständig umschließen können.

Die Dichtungssegmente weisen jeweils ein erstes Ende und ein zweites Ende auf. Die Dichtungssegmente sind ausgebildet, im montierten Zustand jeweils zusammengelegt ringförmig um die drehbare Welle angeordnet zu sein, sodass jeweils ein erstes Ende des Dichtungssegments und ein zweites Ende des unmittelbar benachbarten Dichtungssegments eine gemeinsame Stoßstelle bilden. Jeweils am ersten Ende ist ein vorspringender Bereich angeordnet. Der jeweilige vorspringende Bereich springt entlang der Haupterstreckungsrichtung tangential zur drehbaren Welle in Richtung der vorgegebenen Hauptdrehrichtung der drehbaren Welle vor, sodass er jeweils über das jeweilige Dichtungssegment übersteht und die jeweilige zugehörige Stoßstelle auf einer dem Innenraum zugewandten Seite überlappt. Das Ausbilden des Dichtungskörpers aus mehreren Dichtungssegmenten ermöglicht beispielsweise eine einfachere Herstellung und Montage des Dichtungskörpers. Aufgrund der verlässlichen Überdeckung der Stoßstellen ist ein verlässliches Abdichten des Innenraums trotz einer erhöhten Anzahl der Stoßstellen weiterhin möglich. Auch bei mehreren Stoßstellen, beispielsweise zwei, drei oder vier Stoßstellen wird ein ungewollt übermäßiges Austreten des Schmiermittels durch die Stoßstellen hindurch durch den jeweiligen zugeordneten vorspringenden Bereich vermieden.

Gemäß zumindest einer weiteren Ausführungsform ist der Dichtungskörper aus mindestens zwei Dichtungssegmenten und mindestens einem Dichtungszwischenstück gebildet. Die Dichtungssegmente und das Dichtungszwischenstück sind ausgebildet, in einem montierten Zustand gemeinsam ringförmig um die drehbare Welle angeordnet zu sein, sodass das erste Ende des ersten Dichtungssegments und ein zweites Ende des Dichtungszwischenstück eine gemeinsame Stoßstelle bilden. Ein erstes Ende des Dichtungszwischenstücks und das zweite Ende des zweiten Dichtungssegments bilden eine gemeinsame Stoßstelle. Das erste Ende des zweiten Dichtungssegments und das zweite Ende des ersten Dichtungssegments bilden eine gemeinsame Stoßstelle bilden. Jeweils am ersten Ende der Dichtungssegmente ist ein vorspringender Bereich angeordnet, der entlang der Haupterstreckungsrichtung tangential zur drehbaren Welle in Richtung einer vorgegebenen Hauptdrehrichtung der drehbaren Welle vorspringt. Am ersten Ende des Dichtungszwischenstücks ist ein vorspringender Bereich angeordnet, der tangential zur drehbaren Welle in Richtung einer vorgegebenen Hauptdrehrichtung der drehbaren Welle vorspringt, sodass der vorspringende Bereich des ersten Dichtungssegments über das Dichtungszwischenstück übersteht, der vorspringende Bereich des Dichtungszwischenstücks über das zweite Dichtungssegment übersteht und der vorspringende Bereich des zweiten Dichtungssegments über das erste Dichtungssegment übersteht. Somit überlappen die jeweiligen vorspringenden Bereiche die jeweilige zugehörige Stoßstelle auf einer dem Innenraum zugewandten Seite überlappt.

Das Dichtungszwischenstück ermöglicht beispielsweise ein Nachrüsten der Dichtungsanordnung an einer bereits bestehenden Windenergieanlage. Die beispielsweise bereits vorhandenen Dichtungssegmente könnte bearbeitet werden, beispielsweise mittels Schneiden, um die vorspringenden Bereiche auszubilden. Die Dichtungssegmente werden jeweils an einem ihrer Enden, insbesondere an ihrem ersten Ende, bearbeitet, um die vorspringenden Bereichen auszubilden. Beispielsweise ist es auch möglich, die Dichtungssegmente am jeweiligen zweiten Ende zu bearbeiten und dann die Dichtungssegmente umzudrehen.

Die durch das Bearbeiten auftretende Verkürzung der Dichtungssegmente ist mittels des Dichtungszwischenstücks gefüllt. Die Dichtungssegmente und das Dichtungszwischenstück umgeben somit gemeinsam die drehbare Welle vollständig. Die jeweiligen vorspringenden Bereiche überlappen die Stoßstellen derart, dass das Schmiermittel im Betrieb aufgrund der Rotation der drehbaren Welle und des daran anhaftenden Schmiermittels mittels des vorspringenden Bereichs von den jeweiligen Stoßstellen weg bewegt wird.

Gemäß zumindest einer weiteren Ausführungsform weist der Dichtungskörper einen Befestigungsbereich auf. Der Befestigungsbereich ist an dem Lagergehäuse mittels eines Dichtungsträgers befestigbar. Der Dichtungskörper weist eine radial vorstehende Dichtlippe auf, die an der drehbaren Welle anliegt. Der vorspringende Bereich ist an der Dichtlippe auf der dem Innenraum zugewandten Seite angeordnet. Beispielsweise weist der Dichtungskörper eine weitere Dichtlippe auf, sodass der Dichtungskörper mit dem Befestigungsbereich und den beiden Dichtlippen beispielsweise nach Art einer Y-Dichtung ausgebildet ist. Eine im montierten Zustand dem Innenraum zugewandte Dichtlippe weist den vorspringenden Bereich auf. Diese Dichtlippe dient insbesondere dazu, zu vermeiden, dass Schmiermittel vom Innenraum nach außen gelangen kann. Die im montierten Zustand dem Innenraum abgewandte Dichtlippe wird auch als Staublippe bezeichnet und dient insbesondere dazu, dass Verschmutzungen von der Umgebung zum Innenraum gelangen können.

Gemäß zumindest einer weiteren Ausführungsform ist der vorspringende Bereich ein zu dem Dichtkörper separates Bauelement. Der vorspringende Bereich als separates Bauelement ist mit dem Dichtungskörper an dem ersten Ende verbunden. Beispielsweise ist der vorspringende Bereich mittels einer Klebeverbindung mit dem Dichtungskörper verbunden. Während der Herstellung sind der vorspringende Bereich und der Dichtungskörper, insbesondere das Dichtungssegment, zueinander separate Bauelemente, die miteinander verbunden werden. In dieser Ausführungsform überdeckt der vorspringende Bereich die Stoßstelle beispielsweise stufenförmig.

Gemäß zumindest einer weiteren Ausführungsform sind der vorspringende Bereich und der Dichtungskörper einstückig miteinander ausgebildet. Beispielsweise ist der vorspringende Bereich mittels Schneidens aus dem Dichtungskörper gebildet. Insbesondere ist der vorspringende Bereich mittels Schneidens aus dem Dichtungssegment ausgebildet. Der vorspringende Bereich und der Dichtungskörper, insbesondere das Dichtungssegment, sind ohne eine zusätzliche nachträglich ausgebildete Verbindung als ein gemeinsamer Körper und Bauelement miteinander ausgebildet. Der vorspringende Bereich ist integraler Bestandteil des Dichtungskörpers, insbesondere des Dichtungssegments. In dieser Ausführungsform überdeckt der vorspringende Bereich die Stoßstelle beispielsweise rampenförmig.

Gemäß zumindest einer Ausführungsform weist eine Windenergieanlage eine Rotorwelle auf, die um eine Drehachse rotierbar ist. Die Windenergieanlage weist ein Lager zur Lagerung der Rotorwelle auf. Die Windenergieanlage weist eine Dichtungsanordnung gemäß einer der hier beschriebenen Ausführungsformen auf. Der Dichtungskörper dieser Dichtungsanordnung ist koaxial zu der Drehachse um die Rotorwelle herum angeordnet. Der Dichtungskörper ist in Bezug auf die Drehachse axial an einem ersten Ende des Rotorlagergehäuses angeordnet.

Die Dichtungsanordnung ist ausgebildet, um den Innenraum abzudichten. Die Dichtungsanordnung ist insbesondere in direktem Kontakt mit der Rotorwelle und dient dazu, ein Austreten von Schmiermittel aus dem Innenraum entlang der Rotorwelle zu vermeiden. Zudem dient die Dichtungsanordnung beispielsweise dazu, ein Eindringen von Schmutz und Fremdkörpern von außerhalb in den Innenraum zu vermeiden. Der vorspringende Bereich der Dichtungsanordnung liegt an der Rotorwelle an und überdeckt die Stoßstelle an der Rotorwelle, so dass Schmiermittel nicht ungewollt in größerer Menge zu der Stoßstelle gelangt und durch die Stoßstelle hindurch nach außen gelangt. Das Schmiermittel wird verlässig im Innenraum gehalten. Somit wird ein verlässliches schmierendes Lager realisiert und ein verlässlicher Betrieb der Windenergieanlage ermöglicht.

Gemäß zumindest einer Ausführungsform weist die Rotorwelle der Windenergieanlage die vorgegebene Hauptdrehrichtung auf. Die Hauptdrehrichtung entspricht insbesondere der Drehrichtung, in der die Rotorwelle im Betrieb die meiste Zeit rotiert, um aus der Windenergie ein Antriebsdrehmoment zu erzeugen. Der vorspringende Bereich springt tangential zu der Rotorwelle in Richtung der Hauptdrehrichtung vor und überdeckt die Stoßstelle, so dass das an der Rotorwelle anhaftendes Schmiermittel im Betrieb durch die Rotorwelle entlang der Hauptdrehrichtung geschoben wird und aufgrund des vorspringenden Bereichs und seiner Ausrichtung entlang der Hauptdrehrichtung über die Stoßstelle hinweg geschoben wird, ohne vermehrt in die Stoßstelle einzudringen.

Gemäß zumindest einer weiteren Ausführungsform weist die Dichtungsanordnung einen weiteren Dichtungskörper auf, der entlang der Drehachse axial an einem zweiten Ende des Rotorlagergehäuses angeordnet ist, um den Innenraum gegenüber der Umgebung an dem zweiten Ende des Rotorlagergehäuses abzudichten. Somit ist der Innenraum entlang der Rotorwelle axial in beide Richtungen verlässlich abgedichtet, insbesondere im Bereich des Lagers.

Weitere Vorteile, Merkmale und Weiterbildungen ergeben sich aus den nachfolgenden in Verbindung mit den Figuren erläuterten Ausführungsbeispielen. Gleiche, gleichartige und gleich wirkende Elemente können mit den gleichen Bezugszeichen versehen sein.

Es zeigen:
Figur 1 eine schematische Darstellung einer Windenergieanlage gemäß einem Ausführungsbeispiel,
Figur 2 eine schematische Darstellung eines Teils der Windenergieanlage gemäß einem Ausführungsbeispiel,
Figuren 3 bis 6 schematische Darstellungen von Dichtungsanordnungen gemäß Ausführungsbeispielen,
Figur 7 eine schematische Schnittansicht eines Dichtungskörpers gemäß einem Ausführungsbeispiel, und
Figuren 8 bis 11 jeweils schematische Darstellungen von Dichtungskörpern gemäß Ausführungsbeispielen.

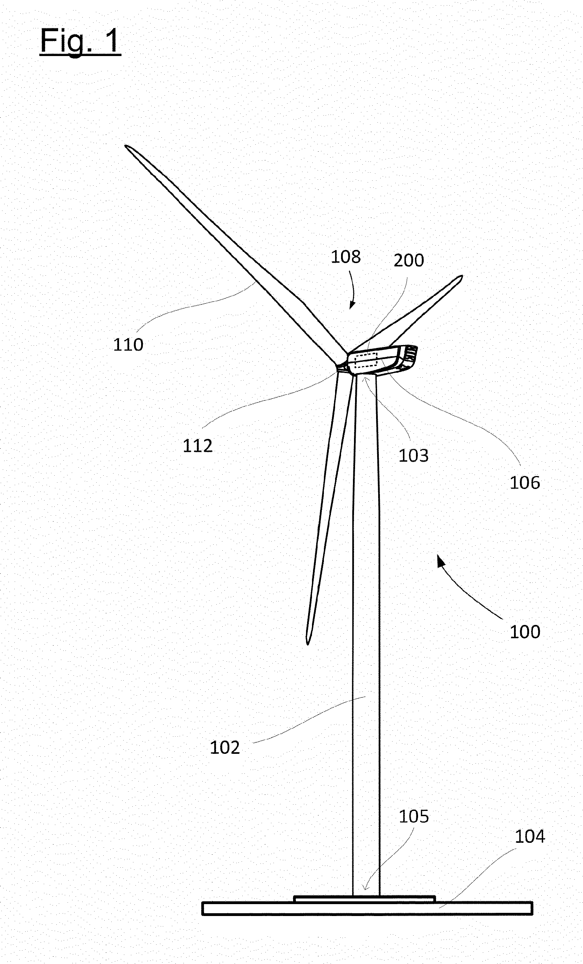

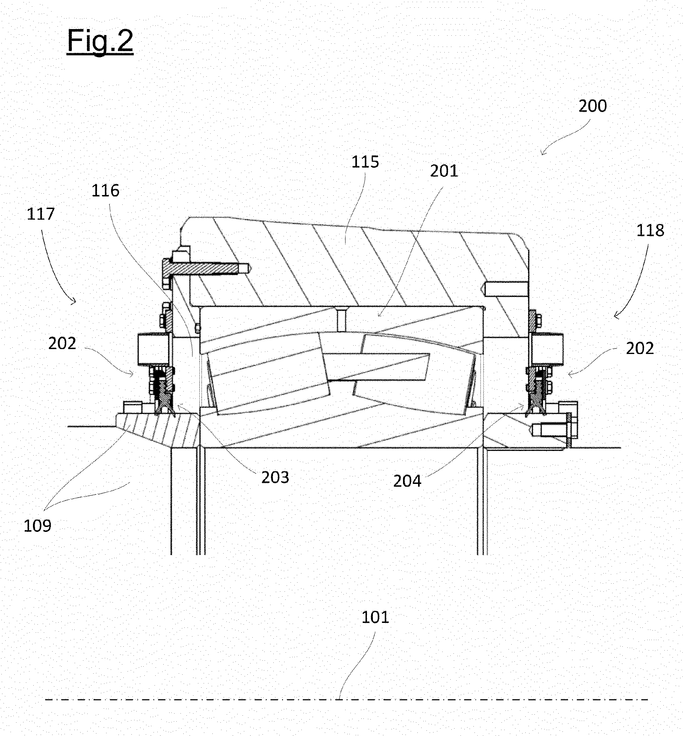

Figur 1 zeigt eine schematische Darstellung einer Windenergieanlage 100 gemäß einem Ausführungsbeispiel. Die Windenergieanlage 100 weist einen Turm 102 auf. Der Turm 102 ist an einem zweiten Ende 105 des Turms 102 mittels eines Fundaments 104 auf einem Untergrund befestigt. An einem dem Untergrund gegenüberliegenden ersten Ende 103 des Turms 102 ist eine Gondel 106 drehbar gelagert. Die Gondel 106 weist beispielsweise einen Generator auf, der über einen Triebstrang mit einem Rotor 108 gekoppelt ist. Der Triebstrang weist beispielsweise eine Rotorwelle 109 (Figur 2), ein Getriebe, eine Kupplung, eine Rotorbremse und sonstige Komponenten auf.

Der Rotor 108 weist beispielsweise ein oder mehrere Rotorblätter 110 auf, die an einer Rotornabe 112 angeordnet sind. Die Rotornabe 112 wiederum ist mit der Rotorwelle 109 verbunden. Die Rotorwelle 109 ist in der Gondel 106 in einem Rotorlagergehäuse 115 mittels eines Lagers 201 (Figur 2) oder mehrerer Lager 201 drehbar gelagert.

Figur 2 zeigt eine schematische Darstellung eines Teils einer Lageranordnung der Windenergieanlage in der Gondel 106. Die Rotorwelle 109 erstreckt sich länglich ausgedehnt entlang einer Drehachse 101. Die Rotorwelle 109 ist im Betrieb um die Drehachse 101 rotierbar. Die Rotorwelle 109 ist in dem Rotorlagergehäuse 115 mittels eines Wälzlagers 201 gelagert, insbesondere ein Pendelrollenlager wie dargestellt. Das Wälzlager 201 ist somit innerhalb eines Innenraums 116 zwischen dem Rotorlagergehäuse 115 und der Rotorwelle 109 angeordnet. Das Wälzlager 201 ermöglicht eine möglichst reibungsarme Rotation der Drehachse 101 relativ zum Rotorlagergehäuse 115.

Der Innenraum 116 ist mittels Dichtungskörpern 203, 204 abgedichtet. Die Dichtungskörper 203, 204 sind an dem Rotorlagergehäuse 115 mittels Dichtungsträgern 202 befestigt. In Bezug auf die Drehachse 101 ist der erste Dichtungskörper 203 axial an einem ersten Ende 117 des Rotorlagergehäuses 115 angeordnet. Insbesondere ist der erste Dichtungskörper 203 auf einer dem Rotor 108 zugewandten Seite des Rotorlagergehäuses 115 angeordnet. In Bezug auf die Drehachse 101 ist der zweite Dichtungskörper 204 axial an einem zweiten Ende 118 des Rotorlagergehäuses 115 angeordnet. Insbesondere ist der zweite Dichtungskörper 204 auf einer dem Rotor 108 abgewandten Seite des Rotorlagergehäuses 115 angeordnet. Die Dichtungskörper 203, 204 sind Teil einer Dichtungsanordnung 200 zum Abdichten des Innenraums 116 zwischen dem Rotorlagergehäuse 115 und der Rotorwelle 109.

Die beiden Dichtungskörper 203, 204 dichten den Innenraum 116 nach außen ab. Die Dichtungskörper 203, 204 umgeben dafür jeweils die Rotorwelle 109 entlang des Umfangs der Rotorwelle 109 und liegen an der Rotorwelle 109 an. Insbesondere können die Dichtungskörper 203, 204 entweder direkt an der Rotorwelle 109 anliegen, oder an einem Laufring, die die Rotorwelle 109 umgibt (wie dargestellt). Die Dichtungskörper 203, 204 sind jeweils dazu ausgebildet, Eindringen von Verschmutzungen von außerhalb in den Innenraum 116 zu vermeiden. Zudem sind die Dichtungskörper 203, 204 jeweils dazu ausgebildet, ein Austreten von Schmiermittel aus dem Innenraum 116 nach außerhalb zu vermeiden.

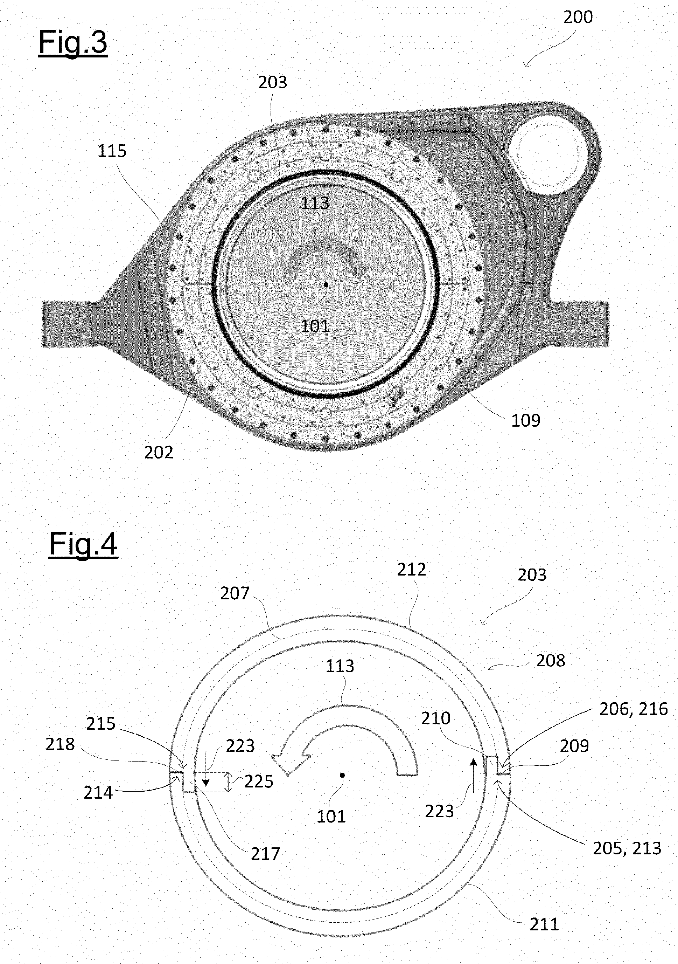

Figur 3 zeigt eine Darstellung des Teils der Lageranordnung der Figur 2 aus Sicht des ersten Endes 117 des Rotorlagergehäuses 115, d.h. aus Sicht des Rotors 108. Aus dieser Sicht dreht sich die Rotorwelle 109 im Betrieb in einer Hauptdrehrichtung 113 im Uhrzeigersinn.

Figur 4 zeigt eine schematische Darstellung des Dichtungskörpers 203 der Figur 3 aus Sicht aus dem Innenraum 116 in Richtung des Rotors 108. Aus dieser Sicht dreht sich die Rotorwelle im Betrieb in einer Hauptdrehrichtung 113, die entgegen dem Uhrzeigersinn angeordnet ist. Der Dichtungskörper 203 weist beispielsweise ein erstes Dichtungssegment 211 und ein zweites Dichtungssegment 212 auf. Die Dichtungssegmente 211, 212 sind jeweils halbkreisförmig ausgebildet, so dass die beiden Dichtungssegmente 211, 212 gemeinsam ringförmig die Rotorwelle 109 vollständig umgeben können. Die Dichtungssegmente 211, 212 sind insbesondere gleichartig aufgebaut.

Das erste Dichtungssegment 211 weist ein erstes Ende 213 und ein gegenüberliegendes zweites Ende 214 auf. Das erste Ende 213 des ersten Dichtungssegments 211 entspricht beispielsweise einem ersten Ende 205 des Dichtungskörpers 203.

Das zweite Dichtungssegment 212 weist korrespondierend ein erstes Ende 215 und ein zweites Ende 216 auf. Das zweite Ende 216 des zweiten Dichtungssegments 212 entspricht beispielsweise einem zweiten Ende 206 des Dichtungskörpers 203.

Die Dichtungssegmente 211, 212 erstrecken sich jeweils zwischen den zugehörigen ersten Enden 213, 215 und den zugehörigen zweiten Enden 214, 216 entlang einer Haupterstreckungsachse 207 länglich ausgedehnt. Entlang der Haupterstreckungsachse 207, die insbesondere ringförmig verläuft, weisen die Dichtungssegmente 211, 212 jeweils eine deutlich längere Ausdehnung auf, als quer zur Haupterstreckungsachse 207. Der Dichtungskörper 203 und die Dichtungssegmente 211, 212 sind entlang einer Ringform 208 ausgebildet, um die Rotorwelle 109 ringförmig umgeben zu können.

An dem ersten Ende 213 des ersten Dichtungssegments 211 ist ein vorspringender Bereich 210 ausgebildet. Der vorspringende Bereich des ersten Dichtungssegments 211 springt entlang der Haupterstreckungsachse 207 über das erste Ende 213 vor, so dass der vorspringende Bereich 210 über das erste Ende 213 übersteht.

Korrespondierend ist an dem ersten Ende 215 des zweiten Dichtungssegments 212 ein weiterer vorspringender Bereich 217 ausgebildet, der über das erste Ende 215 des zweiten vorspringenden Bereichs 210 übersteht.

Die Dichtungssegmente 211, 212 sind ausgebildet, sodass im montierten Zustand das erste Ende 213 des ersten Dichtungssegments 211 gemeinsam mit dem zweiten Ende 216 des zweiten Dichtungssegments 212 eine gemeinsame Stoßstelle 209 ausbildet. An der Stoßstelle 209 sind das erste Ende 213 und das zweite Ende 216 im montierten Zustand in direktem Kontakt miteinander oder zumindest unmittelbar gegenüberliegend angeordnet.

Entsprechend ist der Dichtungskörper 203 ausgebildet, sodass im montierten Zustand das erste Ende 205 des Dichtungskörpers 203 gemeinsam mit dem zweiten Ende 206 des Dichtungskörpers 203 die gemeinsame Stoßstelle 209 ausbildet. An der Stoßstelle 209 sind das erste Ende 205 und das zweite Ende 206 im montierten Zustand in direktem Kontakt miteinander oder zumindest unmittelbar gegenüberliegend angeordnet.

Korrespondierend sind das erste Ende 215 des zweiten Dichtungssegments 212 und das zweite Ende 214 des ersten Dichtungssegments 211 ausgebildet, um eine weitere gemeinsame Stoßstelle 218 miteinander auszubilden. Somit sind die beiden Dichtungssegmente 211, 212 ausgebildet, gemeinsam die Rotorwelle 109 zu umschließen und abzudichten. Aufgrund von Toleranzen, Montageungenauigkeiten oder Alterungseffekten können die Stoßstellen 209, 218 unzureichend dicht sein. Außerdem kann sich das Schmiermittel durch die Rotation der drehbaren Welle lokal an den Stoßstellen 209, 218 akkumulieren, sodass Staudruckeffekte entstehen. Ohne die vorspringenden Bereiche 210, 217 könnte so Schmiermittel an den Stoßstellen 209, 218 entlang durch die Dichtungsanordnung 200 hindurch nach außen gelangen. Um dies zu vermeiden, sind die vorspringenden Bereiche 210, 217 vorgesehen, die im betriebsfertigen Zustand die jeweilige zugehörige Stoßstelle 209, 218 auf einer radial der Rotorwelle 109 zugewandten Seite überdecken. Dazu springt der vorspringende Bereich 210 des ersten Dichtungssegments 211 entlang einer Tangentialrichtung 223 vor, sodass der vorspringende Bereich 210 des ersten Dichtungssegments 211 bis über das zweite Ende 216 des zweiten Dichtungssegments 212 übersteht und somit bis über das zweite Ende 216 des zweiten Dichtungssegments 212 reicht. Korrespondierend springt der vorspringende Bereich 217 des zweiten Dichtungssegments 212 entlang der Tangentialrichtung 223 vor, sodass der vorspringende Bereich 217 des zweiten Dichtungssegments 212 bis über das zweite Ende 214 des ersten Dichtungssegments 211 übersteht und somit bis über das zweite Ende 214 des ersten Dichtungssegments 211 reicht. Die Tangentialrichtung 223 bezieht sich insbesondere auf den Umfang der Rotorwelle 109.

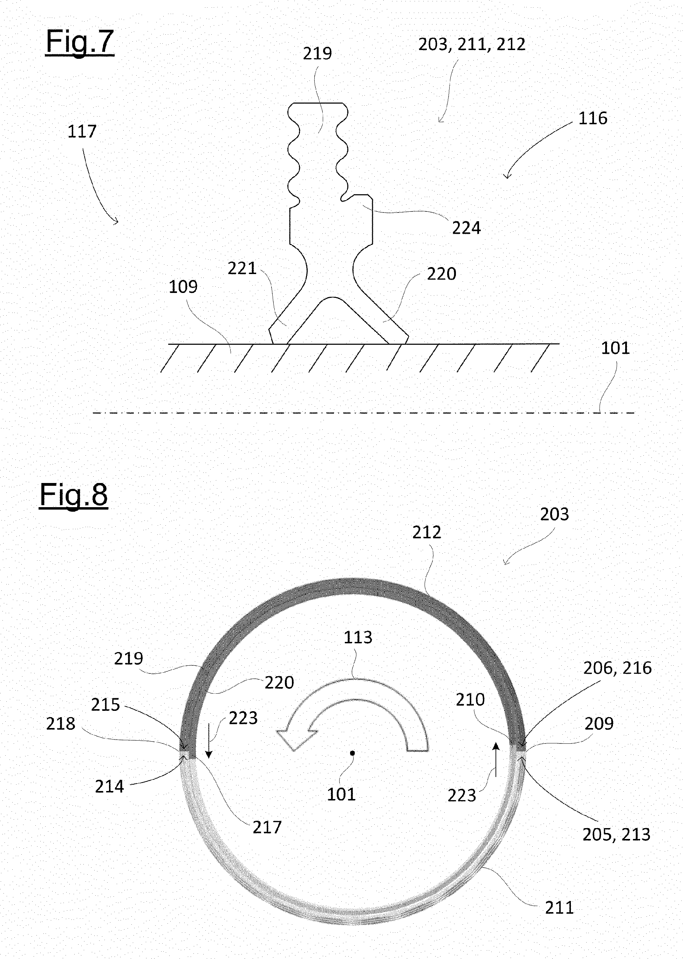

Im gezeigten Ausführungsbeispiel sind die vorspringenden Bereiche 210, 217 jeweils beispielsweise einstückig mit dem zugehörigen Dichtungssegment 211, 212 ausgebildet. Beispielsweise sind die vorspringenden Bereich 210, 217 mittels Schneidens jeweils aus den zugehörigen Dichtungssegmente 211, 212 gebildet. In diesem Ausführungsbeispiel überdeckt der vorspringenden Bereich 210 des ersten Dichtungssegments 211 die Stoßstelle 209 rampenförmig und überlappt das zweite Ende 216 des zweiten Dichtungssegments 212. Gleichermaßen überdeckt der vorspringenden Bereich 217 des zweiten Dichtungssegments 212 die Stoßstelle 218 rampenförmig und überlappt das zweite Ende 214 des ersten Dichtungssegments 211. Auch eine separate Ausgestaltung ist möglich, bei der die vorspringenden Bereiche 210, 217 jeweils beispielsweise mittels einer Klebeverbindung an dem zugehörigen Dichtungssegment 211, 212 befestigt sind (Figur 8).

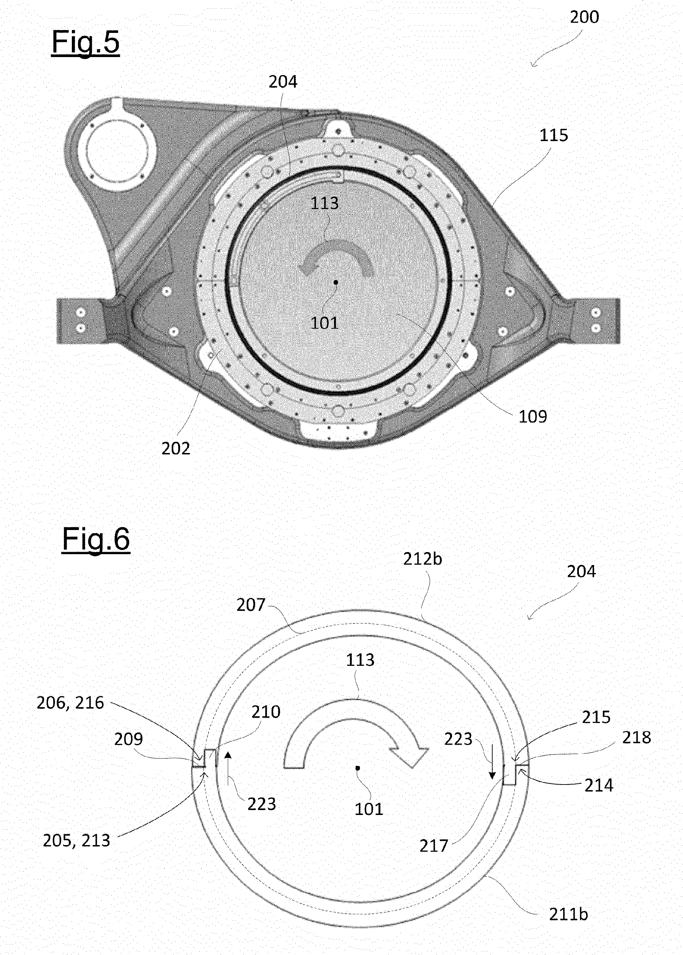

Figur 5 zeigt eine Darstellung des Teils der Lageranordnung der Figur 2 aus Sicht auf das zweite Ende 118 des Rotorlagergehäuses 115, d.h. aus Sicht der dem Rotor 108 abgewandten Seite (Getriebeseite oder Generatorseite je nach Triebstrangkonzept). Aus dieser Sicht dreht sich die Rotorwelle 109 im Betrieb in einer Hauptdrehrichtung 113 entgegen dem Uhrzeigersinn.

Figur 6 zeigt eine schematische Darstellung des Dichtungskörpers 204 der Figur 5 aus Sicht aus dem Innenraum 116 in Richtung der dem Rotor 108 abgewandten Seite (d.h. in Richtung der Getriebeseite oder Generatorseite je nach Triebstrangkonzept). Aus dieser Sicht dreht sich die Rotorwelle im Betrieb in einer Hauptdrehrichtung 113, die im Uhrzeigersinn ausgerichtet ist. Verglichen mit dem Dichtungskörper 203 der Figur 4 ist der Dichtungskörper 204 spiegelverkehrt aufgebaut. Der Dichtungskörper 204 weist beispielsweise ein erstes Dichtungssegment 211b und ein zweites Dichtungssegment 212b. Das erste Ende 213, 215 und das zweite Ende 214, 216 der Dichtungssegmente 211b, 212b sind verglichen mit dem ersten Ende 213, 215 und dem zweiten Ende 214, 216 der Dichtungssegmente 211, 212 jeweils vertauscht. Entsprechend sind die vorspringenden Bereiche 210, 217 aus Sicht des Innenraums in Richtung der dem Rotor 108 abgewandten Seite (Figur 6) genau gegengesetzt angeordnet in Bezug auf die Sicht aus dem Innenraum 216 in Richtung des Rotors 108 (Figur 4). Ansonsten sind die Dichtungskörper 203, 204 insbesondere gleichartig aufgebaut, sodass Merkmale, Vorteile und Ausgestaltungen des Dichtungskörpers 203 auch für den anderen Dichtungskörper 204 gelten. Die Dichtungskörper 203, 204 sind so aufgebaut, dass die vorspringenden Bereiche 210, 217 sowohl rotorseitig als auch getriebeseitig bzw. generatorseitig jeweils entlang der Hauptdrehrichtung 113 über die Stoßstelle hinweg vorspringen. Somit ist gewährleistet, dass die jeweiligen vorspringenden Bereiche 210, 217 das Schmiermittel möglichst von den Stoßstellen 209, 218 abhalten.

Figur 7 zeigt eine schematische Darstellung der Dichtungssegmente 211, 212 des Dichtungskörpers 203 in einer Schnittansicht quer zur Drehachse 101. Die Dichtungssegmente 211, 212 des Dichtungskörpers 203 sind insbesondere gleichartig ausgebildet. Die Dichtungssegmente 211, 212 weisen jeweils einen Befestigungsbereich 219 auf. Dieser dient insbesondere dazu, die Dichtungssegmente 211, 212 an einem jeweils zugehörigen Dichtungsträger 202 (Figur 2, Figur 3) zu befestigen. Mittels des Dichtungsträgers 202 ist das Dichtungssegment 211, 212 an dem Rotorlagergehäuse 115 befestigbar. Radial der Rotorwelle 109 zugewandt ist an dem Befestigungsbereich 219 eine erste Dichtlippe 220 angeordnet. Axial entlang der Rotorwelle 109 neben der ersten Dichtlippe 220 ist eine weitere Dichtlippe 221 vorgesehen. Die erste Dichtlippe 220 ist axial dem Innenraum 116 zwischen dem Rotorlagergehäuse 115 und der Rotorwelle 109 zugewandt. Die weitere Dichtlippe 221 ist axial einer Außenseite zugewandt, insbesondere der dem Rotor 108 zugewandten Seite 117.

Die dem Innenraum 116 zugewandte Dichtlippe 220 weist jeweils den vorspringenden Bereich 210 beziehungsweise 217 auf. Der vorspringende Bereich 210, 217 ist an der Dichtlippe 220 zugeordnet, die vorrangig in Kontakt mit dem Schmiermittel kommt. Beispielsweise ist an der weiteren Dichtlippe 221 kein vorspringender Bereich ausgebildet.

Die Dichtungssegmente 211, 212 weisen jeweils eine Schulter 224 auf. Die erste Dichtlippe 220 und die weitere Dichtlippe 221, die jeweils an der Rotorwelle 109 anliegen, werden durch die Schulter 224 an der Rotorwelle 109 definiert vorgespannt, sodass ein Schmiermittelaustritt zwischen den jeweiligen Dichtlippen 220, 221 und der Rotorwelle 109 reduziert oder sogar verhindert wird.

Das Ausführungsbeispiel der Figur 7 gilt auch für den Dichtungskörper 204, der auf der dem Rotor 108 abgewandten Seite angeordnet ist (spiegelverkehrt). Die Dichtungssegmente 211b, 212b des Dichtungskörpers 204 sind insbesondere korrespondierend zu den Dichtungssegmente 211, 212 des Dichtungskörpers 203 ausgebildet.

Gemäß weiteren Ausführungsbeispielen weisen die Dichtungssegmente 211, 212 andere Querschnitte auf und weisen beispielsweise nur eine Dichtlippe 220 und keine weitere Dichtlippe 221 auf.

Figur 8 zeigt eine schematische Darstellung der Dichtungssegmente 211, 212 des Dichtungskörpers 203 gemäß einem weiteren Ausführungsbeispiel aus Sicht aus dem Innenraum 116 in Richtung des Rotors 108. In diesem Ausführungsbeispiel sind die vorspringenden Bereiche 210, 217 separate Bauelemente, die jeweils mit dem ersten Ende 213, 215 der zugehörigen Dichtungssegmente 211, 212 verbunden sind. Die vorspringenden Bereiche 210, 217 sind jeweils beispielsweise mittels einer Klebeverbindung an dem zugehörigen Dichtelement 211, 212 befestigt. Die vorspringenden Bereiche 210, 217 sind während der Herstellung zunächst separat zu den Dichtelement 211, 212 ausgebildet und werden dann mittels Kleben mit den zugehörigen Dichtelemente 211, 212 verbunden. Auch andere Befestigungsarten sind möglich, die eine ausreichende Beständigkeit gegenüber den im Betrieb verwendeten Schmiermitteln haben.

In diesem Ausführungsbeispiel sind die vorspringenden Bereiche 210, 217 mit den zugehörigen Dichtelemente 211, 212 verbunden, insbesondere jeweils mit der Dichtlippe 220 der zugehörigen Dichtelemente 211, 212 auf der dem Innenraum 116 zugewandten Seite. Der vorspringender Bereich 210 des ersten Dichtungssegments 211 überdeckt die Stoßstelle 209 stufenförmig und überlappt das zweite Ende 216 des zweiten Dichtungssegments 212. Gleichermaßen überdeckt der vorspringenden Bereich 217 des zweiten Dichtungssegments 212 die Stoßstelle 218 stufenförmig und überlappt das zweite Ende 214 des ersten Dichtungssegments 211.

Das Ausführungsbeispiel der Figur 8 gilt korrespondierend auch für den Dichtungskörper 204, der auf der dem Rotor 108 abgewandten Seite angeordnet ist (spiegelverkehrt).

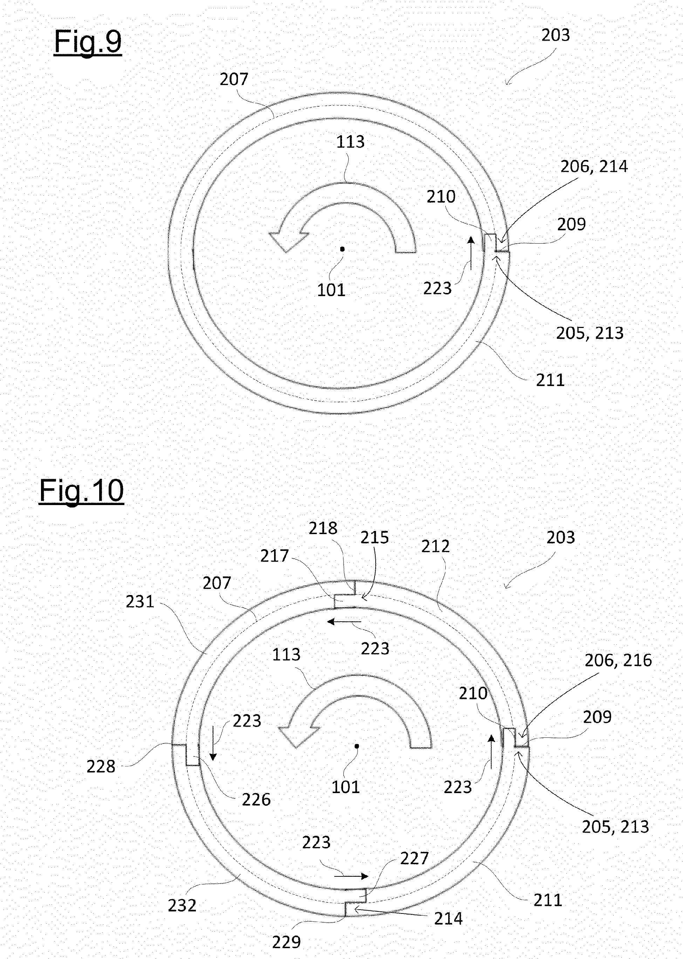

Figur 9 zeigt den Dichtungskörper 203 gemäß einem weiteren Ausführungsbeispiel. Der Dichtungskörper 203 weist nur ein einziges Dichtungssegment 211 auf. An einem ersten Ende 205 des Dichtungskörpers 203, das insbesondere dem ersten Ende 213 des Dichtungssegments 211 entspricht, ist der vorspringende Bereich 210 ausgebildet. Der vorspringende Bereich 210 überlappt ein zweites Ende 206 des Dichtungskörpers 203, das insbesondere dem zweiten Ende 214 des Dichtungssegments 211 entspricht. Somit weist der Dichtungskörper 203 nur eine einzige Stoßstelle 209 auf.

Im dargestellten Ausführungsbeispiel der Figur 9 sind der vorspringende Bereich 210 und das Dichtungssegment 211 einstückig miteinander ausgebildet. Beispielsweise ist das Dichtungssegment 211 am ersten Ende 209 so abgeschnitten, dass lediglich der vorspringende Bereich 210 der Dichtlippe 220 übrig bleibt und beispielsweise die weitere Dichtlippe 221 und der Befestigungsbereich 219 entfernt sind. Natürlich ist es gemäß weiteren Ausführungsbeispielen auch möglich, in der Ausgestaltung gemäß Figur 9 mit nur einem einzigen Dichtungssegment 211 den vorspringenden Bereich 210 als separates Bauelement nachträglich mit dem Dichtungssegment 211 zu verbinden, insbesondere zu verkleben.

Das Ausführungsbeispiel der Figur 9 gilt korrespondierend auch für den Dichtungskörper 204, der auf der dem Rotor 108 abgewandten Seite angeordnet ist (spiegelverkehrt).

Figur 10 zeigt den Dichtungskörper 203 gemäß einem weiteren Ausführungsbeispiel. Der Dichtungskörper 203 weist vier Dichtungssegmente 211, 212, 231, 232 auf, die ausgebildet sind, gemeinsam die Rotorwelle 109 ringförmig vollständig zu umschließen. Die jeweiligen Stoßstellen 209, 218, 228, 229 sind von einem zugehörigen vorspringenden Bereich 210, 217, 226, 227 innenseitig überdeckt. Die vorspringenden Bereiche 210, 217, 226, 227 springen jeweils entlang der Hauptdrehrichtung 113 entlang der Tangentialrichtung 223 vor.

Das Ausführungsbeispiel der Figur 10 gilt korrespondierend auch für den Dichtungskörper 204, der auf der dem Rotor 108 abgewandten Seite angeordnet ist (spiegelverkehrt).

Gemäß weiteren Ausführungsbeispielen sind auch weitere Anzahlen an Dichtungssegmenten 211, 212 möglich, die gemeinsam ringförmig die Rotorwelle 109 umgeben, insbesondere drei Dichtungssegmente 211, 212, fünf Dichtungssegmente 211, 212 oder mehr Dichtungssegmente 211, 212. Die Dichtungssegmente 211, 212, die gemeinsam ringförmig die Rotorwelle 109 umgeben, können alle gleich lang sein, so dass sie jeweils ein gleich großes Ringsegment überdecken oder die Dichtungssegmente 211, 212 sind zueinander unterschiedlich lang und überdecken unterschiedlich lange Ringsegmente, die gemeinsam einen vollständigen Ring von 360° bilden.

In den verschiedenen Ausführungsbeispielen ist es möglich, dass die jeweiligen vorspringenden Bereiche 210, 217 jeweils einstückig mit dem zugehörigen Dichtungssegment 211, 212 ausgebildet sind oder dass die vorspringenden Bereiche 210, 217 jeweils an das zugehörige Dichtungssegment 211, 212 angeklebt oder anderweitig verbunden sind. Auch Mischungen sind möglich, beispielsweise ist der vorspringende Bereich 210 eines der Dichtungssegmente 211 mittels der Klebeverbindung verbunden und ein anderer vorspringender Bereich 217 ist einstückig mit dem zugehörigen Dichtungssegmente 212 verbunden. Die unterschiedlichen Ausführungsbeispiele der Figuren und insbesondere die einzelnen Ausgestaltungen wie Anzahl der Dichtungssegmente 211, 212 und Ausgestaltung beziehungsweise Befestigung oder Verbindungsart der vorspringenden Bereiche 210, 217 ist zwischen den einzelnen Ausführungsbeispielen der Figuren austauschbar, auch wenn diese Kombination nicht explizit in den Figuren dargestellt ist.

Der vorspringende Bereich 210, 217 ist insbesondere aus dem gleichen Material gebildet wie die Dichtungssegmente 211, 212, insbesondere aus einem Gummi. Entlang der Haupterstreckungsachse 207 erstreckt sich der vorspringende Bereich 211, 212 beispielsweise mit einer Länge 225 in einem Bereich von 10 bis 50 mm, beispielsweise von 10 mm bis 40 mm insbesondere von 10 bis 30 mm (beispielsweise Figur 4). Auch eine längere Länge 225 ist möglich. Zwischen dem Befestigungsbereich 219 und der Rotorwelle 109 weist der vorspringende Bereich 210 beispielsweise die gleiche Höhe auf wie der Rest der Dichtlippe 220. Der vorspringende Bereich 210, 217 ist insbesondere im Betrieb in Kontakt mit der Rotorwelle 109, zumindest teilweise.

Die Dichtungsanordnung 200 mit den vorspringenden Bereichen 210, 217, die die jeweilige zugehörige Stoßstelle 209, 218 so überdecken, dass Schmiermittel im Betrieb von den Stoßstellen 209, 219 abgeleitet wird, ermöglichen eine signifikante Verringerung des Austritts von Schmiermitteln durch die Dichtungskörper 203, 204 hindurch. Somit werden weniger Kosten für Reinigung notwendig. Das Risiko einer Beschädigung der Wälzlager 201, 202 wird vermieden, da eine Unterversorgung an Schmiermittel vermeidbar wird. Andere Bauelemente der Windenergieanlage 100 werden vor austretendem Schmiermittel geschützt, so dass beispielsweise Sensoren oder andere elektronische Bauelemente nicht beschädigt werden. Insgesamt wird die Abdichtfähigkeit der Dichtungsanordnung 200 erhöht und somit die Verlässlichkeit erhöht.

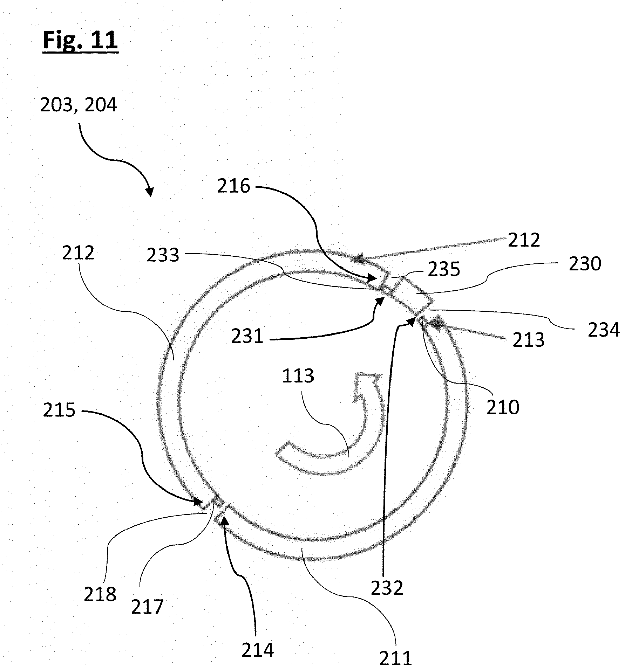

Figur 11 zeigt eine schematische Darstellung des Dichtungskörpers 203, 204 gemäß einem weiteren Ausführungsbeispiel. Der Dichtungskörper 203, 204 entspricht im Wesentlichen den Dichtungskörpern 203, 204 wie in Verbindung mit den vorhergehenden Figuren erläutert. Im Unterschied weist der Dichtungskörper 203, 204 gemäß Figur 11 zusätzlich ein Dichtungszwischenstück 230 auf. Figur 11 zeigt beispielsweise den getriebeseitigen Dichtungskörpers 204 aus Sicht von außen in Richtung zum Rotor 108.

In der Figur sind die Dichtungssegmente 211, 212 und das Dichtungszwischenstück 230 separat voneinander dargestellt. Im betriebsfertigem Zustand liegen die Dichtungssegmente 211, 212 und das Dichtungszwischenstück 230 direkt aneinander, sodass in der Darstellung der vorspringende Bereich 210, 217, 233 jeweils hinter dem Dichtungszwischenstück 230 beziehungsweise dem Dichtungssegment 211, 212 liegt.

Der Dichtungskörper 203, 204 mit dem zusätzlichen Dichtungszwischenstück 230 kann sowohl rotorseitig als auch getriebeseitig bzw. generatorseitig vorgesehen sein.

Die Dichtungssegmente 211, 212 sind so ausgebildet, dass die beiden Dichtungssegmente 211, 212 gemeinsam mit dem Dichtungszwischenstück 230 ringförmig die Rotorwelle 109 vollständig umgeben können. Beispielsweise ist das Dichtungszwischenstück 230 im Querschnitt korrespondierend zu den Dichtungssegmenten 211, 212 ausgebildet wie in Figur 7 dargestellt.

An der Stoßstelle 218 des ersten Ende 215 des zweiten Dichtungssegments 212 und des zweiten Ende 214 des ersten Dichtungssegments 211 ist der weitere vorspringende Bereich 217 vorgesehen, wie oben erläutert.

Im montierten Zustand bilden das erste Ende 213 des ersten Dichtungssegments 211 gemeinsam mit einem zweiten Ende 232 des Dichtungszwischenstücks 230 eine gemeinsame Stoßstelle 234 aus. Ein erstes Ende 231 des Dichtungszwischenstücks 230 bildet gemeinsam mit einem zweiten Ende 216 des zweiten Dichtungssegments 212 eine gemeinsame Stoßstelle 235 aus.

An dem ersten Ende 213 des ersten Dichtungssegments 211 ist ein vorspringender Bereich 210 ausgebildet, wie oben erläutert. Der vorspringende Bereich 210 des ersten Dichtungssegments 211 springt entlang der Tangentialrichtung vor, sodass der vorspringende Bereich 210 des ersten Dichtungssegments 211 bis über das zweite Ende 232 des Dichtungszwischenstücks 230 übersteht und somit bis über das zweite Ende 232 des Dichtungszwischenstücks 230 reicht.

An dem ersten Ende 231 des Dichtungszwischenstücks 230 ist ein vorspringender Bereich 233 vorgesehen, der insbesondere korrespondierend zu den vorspringenden Bereichen 210, 217 ausgebildet ist. Der vorspringende Bereich 233 des Dichtungszwischenstücks 230 springt entlang der Tangentialrichtung vor, sodass der vorspringende Bereich 233 des Dichtungszwischenstücks 230 bis über das zweite Ende 216 des zweiten Dichtungssegments 212 übersteht und somit bis über das zweite Ende 216 des zweiten Dichtungssegments 212 reicht.

Die vorspringenden Bereiche 210, 217, 233 sind sowohl rotorseitig als auch getriebeseitig bzw. generatorseitig jeweils so angeordnet, dass sie jeweils entlang der Hauptdrehrichtung 113 über die zugehörige Stoßstelle 234, 235, 218 hinweg vorspringen. Somit ist gewährleistet, dass die jeweiligen vorspringenden Bereiche 210, 217, 233 das Schmiermittel möglichst von den Stoßstellen 234, 218, 235 abhalten.

Das Dichtungszwischenstück 230 weist entlang seiner Längsrichtung beispielsweise eine Länge von mindestens 3 cm und maximal 50 cm auf, insbesondere eine Länge von mindestens 5 cm und maximal 20 cm oder maximal 10 cm.

Beispielsweise eignet sich das Ausführungsbeispiel gemäß Figur 11 zum Nachrüsten an einer bereits bestehenden Windenergieanlage 100. Zum Beispiel soll an der Windenergieanlage 100 die Dichtungsanordnung 200 mit den überlappten Stoßstellen vorgesehen werden. An der Windenergieanlage sind bereits Dichtungskörper zum Abdichten des Innenraums 116 vorhanden, wobei diese Dichtungskörper zunächst keine vorspringenden Bereiche 210, 217 gemäß der vorliegenden Offenbarung aufweisen.

Zunächst wird die Befestigung der Dichtungssegmente 211, 212 gelöst, sodass die Dichtungssegmente 211, 212 von dem Dichtungsträger 202 gelöst werden können. Beispielsweise wird hierzu ein sogenanntes Spannblech gelöst, das mittels Schrauben an dem Dichtungsträger 202 befestigt ist, um die Dichtungssegmente 211, 212 zu halten.

Nachfolgend wird an dem ersten Ende 213 des ersten Dichtungssegments 211 beispielsweise mittels einer Schere oder einem anderen Schneidwerkzeug ein Teil des Dichtungssegments 211 entfernt, sodass der vorspringende Bereich 210 übrig bleibt. Insbesondere wird die äußere weitere Dichtlippe 221 bereichsweise entfernt, sodass die dem Innenraum 116 zugewandte Dichtlippe 220 bestehen bleibt, um den vorspringende Bereich 210 auszubilden. Insbesondere bleibt nur die dem Innenraum 116 zugewandte Dichtlippe 220 übrig. Der Rest der Dichtung, insbesondere die weitere Dichtlippe 221, der Befestigungsbereich 219 und die Schulter 224, wird bereichsweise entfernt. Beispielsweise wird das erste Ende 213 des ersten Dichtungssegments 211 so beschnitten, dass die dem Innenraum 116 zugewandte Dichtlippe 220 mit einer Länge von etwa 20 mm bis 40 mm übrig bleibt. Das Entfernen des Teilbereichs erfolgt beispielsweise am ersten Ende 213, 215 der Dichtungssegmente 211, 211b, 212, 212b, um den jeweiligen vorspringenden Bereich 210, 217 jeweils am ersten Ende 213, 215 auszubilden. Alternativ erfolgt das Entfernen am jeweiligen zweiten Ende und dann werden die Dichtungssegmente umgedreht.

Korrespondierend wird an dem ersten Ende 215 des zweiten Dichtungssegments 212 ein Teil des Dichtungssegments 212 entfernt, sodass der vorspringende Bereich 217 übrig bleibt. Insbesondere wird die äußere weitere Dichtlippe 221 bereichsweise entfernt, sodass die dem Innenraum 116 zugewandte Dichtlippe 220 bestehen bleibt, um den vorspringende Bereich 217 auszubilden. Insbesondere bleibt nur die dem Innenraum 116 zugewandte Dichtlippe 220 übrig. Der Rest der Dichtung, insbesondere die weitere Dichtlippe 221, der Befestigungsbereich 219 und die Schulter 224, wird bereichsweise entfernt. Beispielsweise wird das erste Ende 215 des zweiten Dichtungssegments 212 so beschnitten, dass die dem Innenraum 116 zugewandte Dichtlippe 220 mit einer Länge von etwa 20 mm bis 40 mm übrig bleibt.

Um den durch das bereichsweise Entfernen fehlenden Abschnitt zum vollständigen Umschließen der Rotorwelle 109 zu verschließen, wird das Dichtungszwischenstück 230 vorgesehen. Beispielsweise ist das Dichtungszwischenstück 230 aus während der Fertigung der Dichtungssegmente 211, 212 anfallendem Verschnitt gebildet, sodass insgesamt kein zusätzlicher Materialaufwand entsteht. Das Dichtungszwischenstück 230 wird insbesondere jeweils in Abhängigkeit von den jeweils tatsächlich entfernten Bereichen der Dichtungssegmente 211, 212 vor der Montage in seiner Länge angepasst, sodass die Stoßstellen 218, 234, 235 und die Überlappungen verlässlich ausgebildet sind.

Die Dichtungssegmente 211, 212 und das Dichtungszwischenstück 230 werden an dem Dichtungsträger 202 befestigt.

Beispielsweise wird das Spannblech wieder an dem Dichtungsträger 202 verschraubt und die Dichtungssegmente 211, 212 und das Dichtungszwischenstück 230 zwischen dem Spannblech und dem Dichtungsträger 202 befestigt. Davor ist es möglich insbesondere das Dichtungszwischenstück 230 separat einzufetten, um ein Trockenlaufen zu vermeiden.

Beispielsweise werden die Stoßstellen 218, 234, 235 zusätzlich versiegelt und/oder verklebt. Darauf kann auch verzichtet werden.

Es ist auch mögliche, dass das Spannblech aus zwei oder mehr Teilspannblechen gebildet ist, beispielsweise ein unteres Spannblech und ein oberes Spannblech. Zuerst wird das erste Spannblech verschraubt, um die Dichtungssegmente 211, 212 an dem Dichtungsträger 202 zumindest teilweise zu befestigen. Danach wird die Lücke zwischen den zwei Dichtungssegmente 211, 212 gemessen, um die Länge des Dichtungszwischenstücks 230 anzupassen. Danach wird das Dichtungszwischenstück 230 eingeführt und das zweite Spannblech wird verschraubt, sodass die Dichtungssegmente 211, 212 und das Dichtungszwischenstück 230 an dem Dichtungsträger befestigt werden. Das Befestigen des Dichtungskörpers 203, 204 an dem Lagergehäuse 115 erfolgt also nicht notwendigerweise in einem einzigen, abschließenden Verfahrensschritt sondern kann für einzelne Dichtungssegmente 211, 212 und das Dichtungszwischenstück 230 in mehreren Teilverfahrensschritten zeitlich beabstandet erfolgen, wobei zwischen den Teilverfahrensschritten beispielsweise andere Verfahrensschritte durchgeführt werden.

Beispielsweise werden die Dichtungssegmente 211, 212 so angeordnet, dass im montierten Zustand das Dichtungszwischenstück 230 in einem oberen Bereich angeordnet ist. Somit ist das Dichtungszwischenstück 230, an dem sich die zwei Stoßstellen 234, 235 befinden, in einem Bereich angeordnet, in dem das Schmiermittel mit weniger Druck von innen gegen die vorspringenden Bereiche 210, 233 drückt als in einem unteren Bereich. Somit lässt sich das Risiko eines Schmiermittelaustritts weiter reduzieren. Da die vorspringenden Bereiche 210, 217, 233 die jeweilige Stoßstelle 234, 218, 235 verlässlich überlappen, ist jedoch auch eine andere Ausrichtung der Dichtungssegmente 211, 212 möglich.

Es ist auch möglich, die vorspringenden Bereiche 210, 217 an den bereits vorhandenen Dichtungskörpern mittels Kleben nachzurüsten.

Es ist auch möglich, das beschriebene Verfahren bei den Ausführungsbeispielen anzuwenden, bei denen der Dichtungskörper vor der Nachrüstung aus mehr als zwei Dichtungssegmente besteht, wie beispielsweise in Figur 10 dargestellt. Es ist auch möglich, das beschriebene Verfahren bei dem einteiligen Dichtungskörper 203, 204 mit nur einem einzigen Dichtungssegment 211 gemäß Figur 9 anzuwenden. Indem Fall gibt es nur zwei Stoßstellen 234, 235 und die Stoßstelle 218 ist nicht vorhanden. Das Dichtungszwischenstück 230 ist dann zwischen den zwei Enden 205, 206 des Dichtungskörpers 203, 204 zu verstehen.

Die hier beschriebenen Ausführungsbeispiele beziehen sich auf eine Dichtungsanordnung 200 für die Lageranordnung der Rotorwelle 109 einer Windenergieanlage. Allerdings ist die Dichtungsanordnung 200 gemäß der vorliegenden Offenbarung auch für andere Lageranordnungen einer Windenergieanlage anwendbar. Die Dichtungsanordnung 200 ist bei jedem Anwendungsbereich einsetzbar, bei dem eine drehbare Welle eine Hauptdrehrichtung aufweist und innerhalb eines Lagergehäuses gelagert ist. Die Lagerung müsste nicht zwangsläufig durch ein Lagergehäuse mit einem Wälzlager gewährleistet werden, sondern das Lagergehäuse kann prinzipiell eine beliebige Anzahl von Lager einer beliebigen Art enthalten.

### Bezugszeichen

- 100: Windenergieanlage
- 101: Drehachse
- 102: Turm
- 103: erstes Ende des Turms
- 104: Fundament
- 105: zweites Ende des Turms
- 106: Gondel
- 108: Rotor
- 109: Rotorwelle, drehbare Welle
- 110: Rotorblatt
- 112: Rotornabe
- 113: Hauptdrehrichtung
- 115: Rotorlagergehäuse
- 116: Innenraum
- 117: Erstes Ende des Rotorlagergehäuses
- 118: Zweites Ende des Rotorlagergehäuses

- 200: Dichtungsanordnung
- 201: Wälzlager
- 202: Dichtungsträger
- 203, 204: Dichtungskörper
- 205: erstes Ende des Dichtungskörpers
- 206: zweites Ende des Dichtungskörpers
- 207: Haupterstreckungsachse
- 208: Ringform
- 209: Stoßstelle
- 210: vorspringender Bereich
- 211, 212: Dichtungssegmente
- 211b, 212b: Dichtungssegmente
- 213, 215: erstes Ende
- 214, 216: zweites Ende
- 217: weiterer vorspringender Bereich
- 218: weitere Stoßstelle
- 219: Befestigungsbereich
- 220: Dichtlippe
- 221: weitere Dichtlippe
- 223: Tangentialrichtung
- 224: Schulter
- 225: Länge
- 226: weiterer vorspringender Bereich
- 227: weiterer vorspringender Bereich
- 228: weitere Stoßstelle
- 229: weitere Stoßstelle
- 230: Dichtungszwischenstück
- 231: erstes Ende des Dichtungszwischenstücks
- 232: zweites Ende des Dichtungszwischenstücks
- 233: vorspringender Bereich des Dichtungszwischenstücks
- 234, 235: Stoßstelle

## Patentansprüche

1. Dichtungsanordnung (200) zum Abdichten eines Innenraums (116) zwischen einem Lagergehäuse (115) und einer drehbaren Welle (109) gegenüber einer Umgebung, aufweisend:
- einen an dem Lagergehäuse (115) befestigbaren Dichtungskörper (203, 204) mit einem ersten Ende (205) und einem zweiten Ende (206), wobei der Dichtungskörper (203, 204) entlang einer Haupterstreckungsrichtung (207) länglich ausgedehnt ist und ausgebildet ist, in einem montierten Zustand ringförmig um die drehbare Welle (109) angeordnet zu sein, sodass das erste Ende (205) und das zweite Ende (206) eine gemeinsame Stoßstelle (209) aufweisen,
- einen vorspringenden Bereich (210), der an dem ersten Ende (205) des Dichtungskörpers (203, 204) angeordnet ist und tangential zur drehbaren Welle (109) in Richtung einer vorgegebenen Hauptdrehrichtung (113) der drehbaren Welle (109) vorspringt, sodass der vorspringende Bereich (210) über den Dichtungskörper (203, 204) übersteht und die Stoßstelle (209) auf einer dem Innenraum (116) zugewandten Seite überlappt.

2. Dichtungsanordnung nach Anspruch 1,
bei der der Dichtungskörper (203, 204) aus mindestens zwei Dichtungssegmenten (211, 211b, 212, 212b) gebildet ist, die jeweils ein erstes Ende (213, 215) und ein zweites Ende (214, 216) aufweisen, wobei die Dichtungssegmente (211, 211b, 212, 212b) ausgebildet sind, in einem montierten Zustand jeweils zusammengelegt ringförmig um die drehbare Welle (109) angeordnet zu sein, sodass jeweils ein erstes Ende (213, 215) des Dichtungssegments (211, 211b, 212, 212b) und ein zweites Ende (214, 216) des unmittelbar benachbarten Dichtungssegments (211, 212, 211b, 212b) eine gemeinsame Stoßstelle (209, 218) bilden, wobei jeweils am ersten Ende (213, 215) des Dichtungssegments (211, 211b, 212, 212b) ein vorspringender Bereich (210, 217) angeordnet ist, der entlang der Haupterstreckungsrichtung (207) tangential zur drehbaren Welle (109) in Richtung einer vorgegebenen Hauptdrehrichtung (113) der drehbaren Welle (109) vorspringt, sodass der jeweilige vorspringende Bereich (210, 217) über das jeweilige Dichtungssegment (211, 211b, 212, 212b) übersteht und die jeweilige zugehörige Stoßstelle (209, 218) auf einer dem Innenraum (116) zugewandten Seite überlappt.

3. Dichtungsanordnung nach Anspruch 1,
bei der der Dichtungskörper (203, 204) aus mindestens zwei Dichtungssegmenten (211, 211b, 212, 212b) und mindestens einem Dichtungszwischenstück (230) gebildet ist,
- wobei die Dichtungssegmente (211, 211b, 212, 212b) jeweils ein erstes Ende (213, 215) und ein zweites Ende (214, 216) aufweisen,
- wobei die Dichtungssegmente (211, 211b, 212, 212b) und das Dichtungszwischenstück (230) ausgebildet sind, in einem montierten Zustand gemeinsam ringförmig um die drehbare Welle (109) angeordnet zu sein, sodass
- das erste Ende (213) des ersten Dichtungssegments (211, 211b) und ein zweites Ende (232) des Dichtungszwischenstücks (230) eine gemeinsame Stoßstelle (234) bilden,
- ein erstes Ende (231) des Dichtungszwischenstücks (230) und das zweite Ende (216) des zweiten Dichtungssegments (212, 212b) eine gemeinsame Stoßstelle (235) bilden,
- das erste Ende (215) des zweiten Dichtungssegments (212, 212b) und das zweite Ende (214) des ersten Dichtungssegments (211, 211b) eine gemeinsame Stoßstelle (218) bilden,
wobei jeweils am ersten Ende (213, 215) der Dichtungssegmente (211, 211b, 212, 212b) ein vorspringender Bereich (210, 217) angeordnet ist, der entlang der Haupterstreckungsrichtung (207) tangential zur drehbaren Welle (109) in Richtung einer vorgegebenen Hauptdrehrichtung (113) der drehbaren Welle (109) vorspringt, und am ersten Ende (231) des Dichtungszwischenstücks (230) ein vorspringender Bereich (233) angeordnet ist, der tangential zur drehbaren Welle (109) in Richtung einer vorgegebenen Hauptdrehrichtung (113) der drehbaren Welle (109) vorspringt,
sodass der vorspringende Bereich (210) des ersten Dichtungssegments (211) über das Dichtungszwischenstück (230) übersteht, der vorspringende Bereich (233) des Dichtungszwischenstücks (230) über das zweite Dichtungssegment (212) übersteht und der vorspringende Bereich (217) des zweiten Dichtungssegments (212) über das erste Dichtungssegment (211) übersteht, sodass der jeweilige vorspringende Bereich (210, 217, 233) die jeweilige zugehörige Stoßstelle (218, 234, 235) auf einer dem Innenraum (116) zugewandten Seite überlappt.

4. Dichtungsanordnung nach einem der Ansprüche 1 bis 3,
bei der der Dichtungskörper (203, 204) einen Befestigungsbereich (219) zur Befestigung an dem Lagergehäuse (115) mittels eines Dichtungsträgers (202) aufweist und mindestens eine radial vorstehende Dichtlippe (220), die ausgebildet ist, in dem montierten Zustand an der drehbaren Welle (109) anzuliegen, wobei der vorspringende Bereich (210, 217) an der dem Innenraum (116) zugewandten Dichtlippe (220) angeordnet ist.

5. Dichtungsanordnung nach einem der Ansprüche 1 bis 4,
bei der der vorspringende Bereich (210, 217) ein zu dem Dichtungskörper (203, 204) separates Bauelement ist, das mit dem Dichtungskörper (203, 204) an dem ersten Ende (205) verbunden ist.

6. Dichtungsanordnung nach einem der Ansprüche 1 bis 5,
bei der der vorspringende Bereich (210, 217) mittels einer Klebeverbindung (222) mit dem Dichtungskörper (203, 204) verbunden ist.

7. Dichtungsanordnung nach einem der Ansprüche 1 bis 4,
bei der der vorspringende Bereich (210, 217) einstückig mit dem Dichtungskörper (203, 204) ausgebildet ist.

8. Windenergieanlage, aufweisend:
- eine Rotorwelle (109), die um eine Drehachse (101) rotierbar ist,
- ein Rotorlagergehäuse (115) zur Aufnahme mindestens eines Lagers (201, 202), das zur Lagerung der Rotorwelle (109) dient,
- eine Dichtungsanordnung (200) nach einem der Ansprüche 1 bis 7, wobei der Dichtungskörper (203, 204) koaxial zu der Drehachse (101) um die Rotorwelle (109) herum in Bezug auf die Drehachse (101) axial an einem ersten Ende (117, 118) des Rotorlagergehäuses (115) angeordnet ist, um den Innenraum (116) zwischen dem Rotorlagergehäuse (115) und der Rotorwelle (109) gegenüber einer Umgebung an dem ersten Ende (117, 118) des Rotorlagergehäuses (115) abzudichten.

9. Windenergieanlage nach Anspruch 8,
bei der die Dichtungsanordnung (200) einen weiteren Dichtungskörper (203, 204) aufweist, der entlang der Drehachse (101) axial an einem zweiten Ende (117, 118) des Rotorlagergehäuses (115) angeordnet ist, um den Innenraum (116) zwischen dem Rotorlagergehäuse (115) und der Rotorwelle (109) gegenüber einer Umgebung an dem zweiten Ende (118) des Rotorlagergehäuses (115) abzudichten.

10. Verfahren zum Anordnen einer Dichtungsanordnung (200) zum Abdichten eines Innenraums (116) zwischen einem Lagergehäuse (115) und einer drehbaren Welle (109) gegenüber einer Umgebung, das Verfahren umfassend:
- Bereitstellen eines Dichtungskörpers (203, 204) mit einem ersten Ende (205) und einem zweiten Ende (206), wobei der Dichtungskörper (203, 204) entlang einer Haupterstreckungsrichtung (207) länglich ausgedehnt ist, und wobei der Dichtungskörper (203, 204) einen vorspringenden Bereich (210) aufweist, der an dem ersten Ende (205) des Dichtungskörpers (203, 204) angeordnet ist,
- Befestigen des Dichtungskörpers (203, 204) an dem Lagergehäuse (115), sodass der Dichtungskörper (203, 204) die drehbare Welle (109) ringförmig umgibt, und das erste Ende (205) und das zweite Ende (206) eine gemeinsame Stoßstelle (209) aufweisen, und der vorspringende Bereich (210) tangential zur drehbaren Welle (109) in Richtung einer vorgegebenen Hauptdrehrichtung (113) der drehbaren Welle (109) vorspringt, sodass der vorspringende Bereich (210) über den Dichtungskörper (203, 204) übersteht und die Stoßstelle (209) auf einer dem Innenraum (116) zugewandten Seite überlappt.

11. Verfahren nach Anspruch 10, bei dem das Bereitstellen des Dichtungskörpers (203, 204) umfasst:
- Demontage des Dichtungskörpers (203, 204) von dem Lagergehäuse (115) in einem Zustand, in dem der Dichtungskörper den vorspringenden Bereich (210) nicht aufweist,
- Entfernen eines Teilbereichs des Dichtungskörpers (203, 204), sodass der vorspringende Bereich (210) ausgebildet wird.

12. Verfahren nach Anspruch 11 umfassend:
- Bereitstellen eines Dichtungszwischenstücks (230), das einen vorspringenden Bereich (233) aufweist,
- Anordnen eines Dichtungssegments (211) des Dichtungskörpers (203, 204) und des Dichtungszwischenstücks (230), sodass
- das erste Ende (213) des Dichtungssegments (211) und ein zweites Ende (232) des Dichtungszwischenstücks (230) eine gemeinsame Stoßstelle (234) bilden,
- ein erstes Ende (231) des Dichtungszwischenstücks (230) und das zweite Ende (214) des Dichtungssegments (211) eine gemeinsame Stoßstelle (235) bilden,
und am ersten Ende (231) des Dichtungszwischenstücks (230) der vorspringende Bereich (233) angeordnet ist, der tangential zur drehbaren Welle (109) in Richtung einer vorgegebenen Hauptdrehrichtung (113) der drehbaren Welle (109) vorspringt,
und der vorspringende Bereich (210) des Dichtungssegments (211) über das Dichtungszwischenstück (230) übersteht, und der vorspringende Bereich (233) des Dichtungszwischenstücks (230) über das Dichtungssegment (211) übersteht, sodass der jeweilige vorspringende Bereich (210, 233) die jeweilige zugehörige Stoßstelle (234, 235) auf einer dem Innenraum (116) zugewandten Seite überlappt,
- Befestigen des Dichtungssegments (211) und des Dichtungszwischenstücks (230) an dem Lagergehäuse (115).

13. Verfahren nach Anspruch 11 oder 12, wobei der Dichtungskörper (203, 204) mindestens zwei Dichtungssegmente (211, 211b, 212, 212b) aufweist, das Verfahren umfassend:
- Jeweils Entfernen eines Teilbereichs des Dichtungssegments (211, 211b, 212, 212b), sodass jedes der Dichtungssegmenten (211, 211b, 212, 212b) einen vorspringenden Bereich (210, 217) aufweist,
- Bereitstellen eines Dichtungszwischenstücks (230), das einen vorspringenden Bereich (233) aufweist,
- Anordnen der Dichtungssegmente (211, 211b, 212, 212b) und des Dichtungszwischenstücks (230), sodass
- das erste Ende (213) des ersten Dichtungssegments (211, 211b) und ein zweites Ende (232) des Dichtungszwischenstücks (230) eine gemeinsame Stoßstelle (234) bilden,
- ein erstes Ende (231) des Dichtungszwischenstück (230) und das zweite Ende (216) des zweiten Dichtungssegments (212, 212b) eine gemeinsame Stoßstelle (235) bilden,
- das erste Ende (215) des zweiten Dichtungssegments (212, 212b) und das zweite Ende (214) des ersten Dichtungssegments (211, 211b) eine gemeinsame Stoßstelle (218) bilden,
und jeweils am ersten Ende (213, 215) des Dichtungssegments (211, 211b, 212, 212b) der vorspringender Bereich (210, 217) angeordnet ist, der entlang der Haupterstreckungsrichtung (207) tangential zur drehbaren Welle (109) in Richtung einer vorgegebenen Hauptdrehrichtung (113) der drehbaren Welle (109) vorspringt, und am ersten Ende (231) des Dichtungszwischenstücks (230) der vorspringender Bereich (233) angeordnet ist, der tangential zur drehbaren Welle (109) in Richtung einer vorgegebenen Hauptdrehrichtung (113) der drehbaren Welle (109) vorspringt,
und der vorspringende Bereich (210) des ersten Dichtungssegments (211) über das Dichtungszwischenstück (230) übersteht, der vorspringende Bereich (233) des Dichtungszwischenstücks (230) über das zweite Dichtungssegment (212) übersteht und der vorspringende Bereich (217) des zweiten Dichtungssegments (212) über das erste Dichtungssegment (211) übersteht, sodass der jeweilige vorspringende Bereich (210, 217, 233) die jeweilige zugehörige Stoßstelle (218, 234, 235) auf einer dem Innenraum (116) zugewandten Seite überlappt,
- Befestigen der Dichtungssegmente (211, 211b, 212, 212b) und des Dichtungszwischenstücks (230) an dem Lagergehäuse (115).
